(19) **Europäisches Patentamt**

**European Patent Office**

**Office européen des brevets**

(11) **EP 1 391 843 A2**

(12) **DEMANDE DE BREVET EUROPEEN**

(43) Date de publication:
   **25.02.2004 Bulletin 2004/09**

(51) Int Cl.⁷: **G06T 5/00**, G06K 9/00,
   G06K 9/46

(21) Numéro de dépôt: **03017992.3**

(22) Date de dépôt: **07.08.2003**

(84) Etats contractants désignés:
   **AT BE BG CH CY CZ DE DK EE ES FI FR GB GR HU IE IT LI LU MC NL PT RO SE SI SK TR**
   Etats d'extension désignés:
   **AL LT LV MK**

(30) Priorité: **20.08.2002 FR 0210421**

(71) Demandeur: **FRANCE TELECOM**
   **75015 Paris (FR)**

(72) Inventeur: **Laurent, Christophe**
   **35630 Vignoc (FR)**

(54) **Procédé de détection des pixels de teinte Y dans une image I et dispositif pour la mise en oeuvre du procédé**

(57)   L'image I comprenant une pluralité de pixels, le procédé comprend une première étape (1) de détection de pixels de teinte Y consistant à détecter au moins une partie des pixels de teinte Y dans l'image d'origine I, une étape (2) de formation d'une image J contenant les pixels de teinte Y détectés lors de la première étape de détection (1), une étape de modélisation (4) consistant à créer au moins un modèle colorimétrique de la teinte Y à partir des pixels de teinte Y détectés lors de la première étape de détection, une seconde étape (5) de détection de pixels de teinte Y dans laquelle consistant, on forme un sous-ensemble V (4a-ii)) de pixels de l'image I non détectés lors de la première étape de détection et voisins des pixels de teinte Y de l'image J (4a-i)) dans l'espace image et, pour chacun des pixels dudit sous-ensemble V, on compare ledit pixel au modèle colorimétrique préalablement créé afin de déterminer s'il s'agit de pixels de teinte Y, et on insère dans l'image J les nouveaux pixels p de teinte Y détectés lors de la seconde étape de détection (4c).

L'invention s'applique notamment à la détection de pixels de teinte chair.

**Fig. 1**

1ère détection — 1
Formation de l'image J — 2
Segmentation — 3
Modélisation — 4
2nde détection — 5

## Description

L'invention concerne un procédé de détection de pixels d'une teinte donnée Y dans une image I et un dispositif convenant à la mise en oeuvre de ce procédé.

Un tel procédé est notamment utilisé pour détecter la teinte "chair" d'une peau humaine dans une image. De nombreuses applications nécessitent la localisation de la teinte "chair". A titre d'exemples, on peut citer la détection et le suivi de visages humains, le suivi de mains, des interfaces homme-machine avancées, l'indexation vidéo, le filtrage de bases de données d'images, etc..

Il existe principalement trois types de méthodes de détection de la teinte "chair".

Les méthodes du premier type, qualifiées de méthodes par "seuillage colorimétrique", sont basées sur l'hypothèse selon laquelle la teinte "chair" occupe une faible partie de l'espace colorimétrique, quel qu'il soit, et peut être facilement séparée des autres couleurs. Ainsi, pour détecter les pixels de teinte "chair" dans une image I, dans un espace colorimétrique C à k dimensions i, par exemple l'espace HSV à trois dimensions H, S et V, pour chaque dimension i de l'espace C, on détermine un intervalle $[C^i_{min}, C^i_{max}]$ suivant la dimension i, considéré être occupé exclusivement par des pixels de teinte "chair", et on compare la composante colorimétrique $I^i(p)$ de chaque pixel p de l'image I suivant la dimension i à l'intervalle de teinte "chair" $[C^i_{min}, C^i_{max}]$, afin de déterminer si le pixel p fait partie d'une région de teinte "chair". En définitive, on calcule un masque binaire teinte "chair" "TC" tel que:

$$TC(p) = \begin{cases} 1 & \text{si } C^i_{min} \leq I^i(p) \leq C^i_{max} \ \forall \ 1 \leq i \leq k \\ 0 & \text{sinon} \end{cases}$$

où :

- $TC(p)$ désigne la valeur du masque binaire à la position *p* ;
- $I^i(p)$ désigne la composante colorimétrique du pixel *p* dans l'image *I* suivant la dimension *i* de l'espace colorimétrique considéré *C*.

La valeur du masque binaire appliqué au pixel p vaut 1 lorsque chacune des k composantes de ce pixel p dans l'espace colorimétrique C, est comprise dans un intervalle de teinte "chair".

Les méthodes de détection du second type, dites "statistiques", reposent en fait sur deux modes de détection.

Le premier mode de détection consiste à concevoir un modèle de teinte "chair" en construisant deux histogrammes : un histogramme représentant les couleurs représentatives de la teinte "chair" et un histogramme représentant les couleurs non teinte "chair". Ces deux histogrammes sont construits à partir de pixels étiquetés manuellement. A partir de ces deux histogrammes et de la formule dite "de Bayes", on en déduit la probabilité qu'une couleur c soit une couleur de teinte "chair" :

$$p(chair|c) = \frac{p(c|chair)p(chair)}{p(c|chair)p(chair) + p(c|\neg chair)p(\neg chair)}$$

où :

- $p(c|chair)$ et $p(c|\neg chair)$ désignent respectivement la probabilité d'avoir la couleur c comme couleur "chair" et couleur non "chair". Ces probabilités sont facilement calculables à partir des deux histogrammes construits ;
- $p(chair)$ et $p(\neg chair)$ désignent respectivement la probabilité d'obtenir de la teinte "chair" et non "chair" quelle que soit la couleur. Ces probabilités peuvent être approchées en étudiant les distributions dans les deux histogrammes construits.

A partir de cette relation, on considère un pixel *p* de couleur *c* comme étant un pixel de teinte "chair" si $p(chair|c) \geq \theta$ où $0 \leq \theta \leq 1$ est un seuil fixé.

Le second mode de détection consiste à modéliser la distribution colorimétrique de la teinte "chair" par une gaussienne ou une mixture de gaussiennes. Cette modélisation s'effectue par un apprentissage à partir d'histogrammes obtenus par un étiquetage manuel des pixels de teinte "chair". Chaque distribution gaussienne est alors caractérisée par sa moyenne et sa matrice de covariance. La couleur *c* d'un pixel *p* peut être comparée au modèle de distribution de la teinte "chair" en calculant la distance de Mahalanobis. Si cette distance est plus faible qu'un seuil fixé, le pixel *p* est considéré comme faisant partie d'une région de teinte "chair".

Les méthodes de détection du troisième type sont basées sur une segmentation de l'image. Elles consistent à coupler les techniques de segmentation de l'image avec les propriétés colorimétriques de la teinte "chair". Généralement, les méthodes de détection de la teinte "chair" utilisant cette approche comprennent

- une étape de segmentation de l'image consistant à segmenter l'image entière en une pluralité de régions colorimétriques et à modéliser chaque région par un modèle colorimétrique, et
- une étape de détection des régions de teinte "chair" consistant à comparer le modèle de chaque région colorimétrique à un modèle de teinte "chair" préétabli et, si la distance entre les deux modèles est inférieure à un seuil prédéfini, à classer la région comme une région de teinte "chair".

Ces diverses méthodes de détection de la teinte "chair" présentent de nombreux inconvénients. Celles basées sur un seuillage colorimétrique nécessitent de bonnes conditions d'éclairage pour fournir des résultats satisfaisants. Lorsque les conditions d'éclairage sont mauvaises, la détection des régions de teinte chair risque d'être partiellement incomplète. Par exemple, sous un éclairage trop important, les pixels de teinte chair apparaissent blancs de sorte qu'ils risquent de pas être détectés comme pixels de teinte chair par seuillage colorimétrique. Les méthodes de détection statistiques sont plus robustes vis-à-vis des conditions d'éclairage, autrement dit moins sensibles à celles-ci, mais seulement si la base d'apprentissage est suffisamment importante. Or, l'étape d'apprentissage requiert un travail important d'étiquetage en amont. Enfin, les méthodes de détection basées sur la segmentation de l'image s'avèrent également plus robustes vis-à-vis des conditions d'éclairage du fait qu'elles consistent à classer les pixels de l'image par similarité "inter-pixels", c'est-à-dire entre pixels. Cependant, elles nécessitent de segmenter la totalité de l'image afin de déterminer les régions de teinte "chair" et les régions de teinte "non chair", ce qui implique des temps de calcul considérables. En outre, ces méthodes de détection nécessitent l'établissement préalable d'un modèle de teinte chair fiable, lequel est utilisé afin d'être comparé aux modèles de chaque région colorimétrique obtenue par segmentation.
Le document HERODOTOU N et AL: "Automatic location and tracking of the facial région in color vidéo séquences" (SIGNAL PROCESSING. IMAGE COMMUNICATION. ELSEVIER SCIENCE PUBLISHERS, AMSTERDAM, NL, vol.14, n°5, mars 1999, pages 359-388) décrit un procédé de détection de pixels d'une teinte donnée Y dans une image I composée d'une pluralité de pixels p, comprenant

- une première étape de détection de pixels de teinte Y consistant à détecter au moins une partie des pixels de teinte Y dans l'image d'origine I,
- une étape de modélisation consistant à créer au moins un modèle colorimétrique de la teinte Y à partir des pixels de teinte Y détectés lors de la première étape de détection et
- une seconde étape de détection de pixels de teinté Y consistant, pour chacun des pixels d'un sous-ensemble V de pixels de l'image I non détectés lors de la première étape de détection, à comparer ledit pixel au modèle colorimétrique préalablement créé afin de déterminer s'il s'agit de pixels de teinte Y.

Dans le document HERODOTOU, la première étape de détection consiste à extraire de l'image des pixels de teinte chair par seuillage colorimétrique dans l'espace colorimétrique HSV, à l'aide d'un polyèdre principal (PP). Une analyse de l'histogramme de saturation des pixels de teinte chair détectés lors de cette première étape de détection permet de former un polyèdre secondaire (SP) de seuillage colorimétrique, tenant compte du niveau de saturation de l'image. La modélisation consiste ensuite à segmenter les pixels de teinte chair détectés lors de cette première étape de détection afin d'obtenir des régions "HRi" et à générer des objets Oi correspondants. Lors de la seconde étape de détection, on extrait de l'image des pixels de teinte chair à l'aide du polyèdre secondaire (SP), dans l'espace colorimétrique HSV, on calcule la distance colorimétrique entre chaque pixel extrait et le centre de chaque objet Oi et, si la distance calculée est inférieure à un certain seuil, on ajoute le pixel considéré à l'objet Oi. Dans ce document, la seconde étape de détection permet donc de faire croître les régions de teinte chair détectées lors de la première étape de détection, dans l'espace colorimétrique HSV.
Le procédé proposé par HERODOTOU a des performances très limitées d'adaptation aux conditions d'éclairage car seule l'étape de formation du polyèdre secondaire tient compte des conditions d'éclairage. Le problème de l'invention consiste donc à proposer un procédé de détection de pixels d'une teinte donnée Y dans une image I composée d'une pluralité de pixels p, plus robuste aux conditions d'éclairage, sans toutefois requérir de temps de calcul trop importants.
Ce problème est résolu par le fait que

- le procédé comprend une étape de formation d'une image J contenant les pixels de teinte Y détectés lors de la première étape de détection,
- dans la seconde étape de détection, on forme ledit sous-ensemble V à l'aide des pixels voisins des pixels de teinte Y de l'image J dans l'espace image et
- on insère dans l'image J les nouveaux pixels p de teinte Y détectés lors de la seconde étape de détection.

Dans l'invention, la seconde étape de détection est réalisée dans l'espace image et permet de faire croître les régions spatiales de teinte Y détectées lors de la première étape de détection dans l'espace image. La second étape de détection permet donc d'affecter à l'image J des pixels qui sont voisins spatialement dans l'espace image et qui, du fait de cette proximité, sont soumis aux mêmes conditions d'éclairage. Ainsi, si l'image J est plutôt achromatique, elle pourra s'étendre vers des zones également achromatiques. En revanche, si l'image J est plutôt de teinte Y classique (non achromatique), elle ne pourra s'étendre que vers des zones ayant des couleurs très proches des couleurs Y classique. La détection est donc extrêmement robuste vis-à-vis des conditions d'éclairage. En outre, seuls les pixels voisins spatialement de l'image J sont comparés au modèle colorimétrique, ce qui limite considérablement les calculs.

De préférence, à chaque insertion d'un nouveau pixel p dans l'image J,

- on détermine s'il existe au moins un pixel q de l'image I, non pris en compte dans l'image J et voisin de ce nouveau pixel p de l'image J, et
- si tel est le cas, on ajoute ledit pixel voisin q au sous-ensemble V et on réitère la seconde étape de détection en l'appliquant audit pixel q.

D'emblée, on notera que, par l'expression "pixels non pris en compte dans l'image J", on entend désigner les pixels de l'image I n'ayant pas été préalablement détectés comme étant de teinte Y.

Ainsi, on augmente le nombre de pixels de teinte Y de l'image J en y insérant des pixels détectés de proche en proche lors de la seconde étape de détection. Pour chaque nouveau pixel de teinte Y inséré dans l'image J, on examine chaque pixel voisin de ce nouveau pixel de teinte Y, contenu dans l'image J mais non déjà pris en compte dans l'image J, on détermine si ce pixel est de teinte Y et, si tel est le cas, on l'insère dans l'image J.

Avantageusement, la seconde étape de détection des pixels de teinte Y consiste à calculer la distance colorimétrique entre chacun des pixels du sous-ensemble V et le modèle colorimétrique créé à partir de l'image J et à déterminer si cette distance colorimétrique est inférieure à un seuil prédéfini.

Pour insérer de nouveaux pixels de teinte Y dans l'image J :

- on insère les pixels du sous-ensemble V séparés du modèle colorimétrique de teinte Y par une distance colorimétrique inférieure audit seuil dans une structure de données de type tas minimal de manière à former un arbre comprenant des noeuds $e_x$, constitués chacun d'un couple $(p_x, d_x)$ dans lequel $p_x$ et $d_x$ représentent respectivement un pixel de l'image I, voisin d'un pixel de teinte Y de l'image J et non pris en compte dans l'image J, et la distance colorimétrique entre ce pixel $p_x$ et ledit modèle colorimétrique, l'arbre étant tel que la distance $d_x$ associée à chaque noeud $e_x$ est inférieure à la distance $d_x'$ associée à chaque noeud $e_x'$ situé en-dessous du noeud $e_x$ et la distance colorimétrique $d_{min}$ associée au noeud racine $e_{racine}$ est inférieure au rayon r du noyau utilisé par la méthode d'estimation de densité, et
- on affecte le pixel $p_{racine}$ du noeud racine $e_{racine}$ de l'arbre à l'image J.

Dans ce cas, et de préférence,

- pour chaque nouveau pixel $p_x$ de teinte Y affecté à l'image J, on détermine s'il existe au moins un pixel $q_x$ de l'image I non pris en compte dans l'image J et voisin de ce nouveau pixel $p_x$,
- on calcule la distance colorimétrique entre ledit pixel $q_x$ et le modèle colorimétrique de la teinte Y et
- si cette distance est inférieure au rayon r du noyau utilisé par la méthode d'estimation de densité, on insère ledit pixel $q_x$ dans la structure de données de type tas minimal.

Lors de la première étape de détection de pixels de teinte Y de l'image I, on peut détecter les pixels de teinte Y dans l'image I par une opération de seuillage colorimétrique consistant à comparer, pour chaque pixel de l'image I, au moins une composante colorimétrique de ce pixel à un intervalle colorimétrique prédéfini de teinte Y. La méthode de détection des pixels de teinte Y par seuillage colorimétrique présente l'avantage de détecter de façon fiable des pixels de teinte Y. Lorsque les conditions d'éclairage ne sont pas bonnes, la première opération de détection par seuillage colorimétrique laisse certes échapper des pixels de teinte Y, mais ceux-ci sont de toute façon ultérieurement détectés par la deuxième opération de détection.

Dans un mode de réalisation particulier, il est prévu une étape de segmentation de l'image J consistant à former m agglomérats colorimétriques $A_i$ à partir des pixels de teinte Y de l'image J et l'étape de modélisation consiste à modéliser chacun des m agglomérats $A_i$ afin de créer m modèles colorimétriques $M(A_i)$ de teinte Y, chaque modèle colorimétrique $M(A_i)$ de teinte Y étant associé à l'agglomérat $A_i$ à partir de laquelle ledit modèle a été créé.

L'opération consistant à former m agglomérats colorimétriques $A_i$ à partir des pixels de teinte Y de l'image J, détectés lors de la première étape de détection, permet de créer des modèles colorimétriques de teinte Y. La création de plusieurs modèles colorimétriques de teinte Y permet de rendre la détection des pixels de teinte Y plus précise et donc plus fiable.

Avantageusement, après avoir formé les m agglomérats colorimétriques $A_i$, on décompose l'image J en x zones spatiales $Z_{i,j}$ de teinte Y, avec $1 \leq i \leq m, j \geq 1$ et $x \geq m$, contenant chacune un bloc de pixels voisins les uns des autres et appartenant au même agglomérat colorimétrique $A_i$. On forme ainsi, à partir de l'image J, une carte comprenant x zones spatiales $Z_{i,j}$ de teinte Y liées aux différents agglomérats colorimétriques $A_i$.

Avantageusement encore, la seconde étape de détection consiste, pour chacune des zones $Z_{i,j}$ de teinte Y liée à un agglomérat colorimétrique $A_i$ donné, à sélectionner des pixels de l'image I voisins spatialement de cette zone $Z_{i,j}$ de teinte Y, l'ensemble des pixels ainsi sélectionnés formant un sous-ensemble $V_{Zi,j}$, à calculer la distance colorimétrique entre chacun des pixels du sous-ensemble $V_{Zi,j}$ et le modèle colorimétrique $M(A_i)$ de la teinte Y associé à l'agglomérat $A_i$ et à déterminer si cette distance est inférieure au seuil prédéfini afin, si tel est le cas, d'affecter ledit pixel à ladite zone $Z_{i,j}$ de teinte Y.

On fait ainsi croître les zones, ou régions, de teinte Y de l'image J en y insérant des pixels de teinte chair de proche en proche.

De préférence, pour former les m agglomérats colorimétriques lors de l'étape de segmentation de l'image J,

- on calcule un histogramme des teintes Y de l'image J,
- on détermine les modes de l'histogramme constitués par les teintes Y de l'histogramme ayant les plus fortes densités de pixels,
- on associe chacun des pixels de teinte Y de l'image J au mode le plus proche au sens colorimétrique afin de constituer les m agglomérats colorimétriques, chaque agglomérat étant caractérisé par un mode et contenant les pixels associés à ce mode.

Pour déterminer les m couleurs de teinte Y les plus fréquentes de l'image J, on peut calculer un histogramme des couleurs de teinte Y à partir de l'image J et déterminer les m couleurs de cet histogramme présentant les plus fortes densités de pixels par une méthode d'estimation de densité par noyau, par exemple de type "Mean Shift", ledit noyau ayant un rayon r.

L'invention concerne également un dispositif convenant à la mise en oeuvre du procédé précédemment défini, comprenant

- des premiers moyens de détection de pixels de teinte Y de l'image I, agencés pour détecter au moins une partie des pixels de teinte Y dans l'image I,
- des moyens de modélisation agencés pour créer au moins un modèle colorimétrique à partir des pixels de teinte Y détectés par les premiers moyens de détection et
- des seconds moyens de détection de pixels de teinte Y, agencés pour, pour chacun des pixels d'un sous-ensemble V de pixels de l'image I non détectés par les premiers moyens de détection, comparer ledit pixel au modèle colorimétrique préalablement créé afin de déterminer s'il s'agit de pixels de teinte Y,

   dispositif caractérisé par le fait que

- il comprends de moyens pour former une image J contenant les pixels de teinte Y détectés par les premiers moyens de détection,
- les seconds moyens de détection sont agencés pour former ledit sous-ensemble V à l'aide des pixels voisins des pixels de teinte Y de l'image J dans l'espace image et pour insérer dans l'image J les nouveaux pixels p de teinte Y détectés.

L'invention sera mieux comprise à l'aide de la description suivante d'un mode de réalisation particulier du procédé de détection de pixels de teinte Y d'une image I et d'une forme de réalisation du dispositif pour la mise en oeuvre de ce procédé, selon l'invention, en référence au dessin annexé sur lequel:

-   les figures 1 à 5 représentent des organigrammes du mode de réalisation particulier du procédé de l'invention;
-   la figure 6A représente une zone $Z_{i,j}$ de teinte Y de l'image I, liée à un agglomérat colorimétrique $A_i$, et un sous-ensemble voisinage $V_{Zi,j}$ associé à cette zone $Z_{i,j}$ de teinte Y;
-   la figure 6B représente une structure de données de type tas minimale formée à partir du sous-ensemble voisinage $V_{Zi,j}$ de la figure 6A;
-   la figure 7A représente la zone $Z_{i,j}$ de teinte Y et le sous-ensemble voisinage $V_{Zi,j}$ de la figure 6A, après insertion de la racine du tas de la figure 6B;
-   la figure 7B représente le tas de la figure 6B après insertion de la racine du tas et insertion d'un nouveau pixel voisin de la zone $Z_{i,j}$ de teinte Y;

- la figure 8 représente un schéma bloc fonctionnel de la forme de réalisation particulière du dispositif de l'invention.

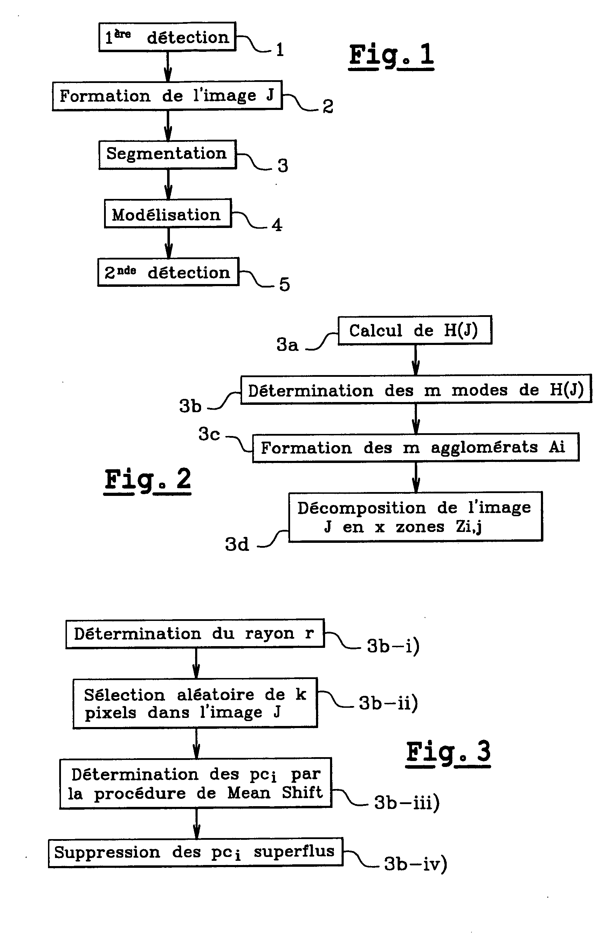

Le procédé de l'invention vise à détecter des pixels de teinte "chair humaine" dans une image I. En référence à la figure 1, le procédé comprend les étapes suivantes:

- une première étape 1 de détection de pixels de teinte chair, consistant à détecter au moins une partie des pixels de teinte chair dans l'image d'origine I,
- une étape 2 de formation d'une image J contenant les pixels de teinte chair détectés lors de la première étape de détection 1 ;
- une étape 3 de segmentation de l'image J consistant à former m agglomérats colorimétriques $A_i$ de teinte chair à partir des pixels de teinte chair de l'image J, dans un espace colorimétrique, et à décomposer l'image J en x zones, ou régions, spatiales $Z_{i,j}$ de teinte Y (avec $1 \leq i \leq m$, $j \geq 1$ et donc $x \geq m$ ) contenant chacune un bloc de pixels de teinte Y voisins les uns des autres (c'est-à-dire ici en contact deux à deux par au moins un côté de pixel) et appartenant à un agglomérat colorimétrique donné $A_i$,
- une étape de modélisation 4 consistant à modéliser chacun des m agglomérats $A_i$ afin de créer m modèles colorimétriques M(A;) de teinte chair, chaque modèle colorimétrique $M(A_i)$ de teinte chair étant associé à l'agglomérat $A_i$ à partir duquel il a été créé,
- une seconde étape 5 de détection de pixels de teinte chair consistant, pour chaque zone $Z_{i,j}$ de teinte Y de l'image J liée à un agglomérat colorimétrique $A_i$ (c'est-à-dire contenant des pixels appartenant à l'agglomérat colorimétrique $A_i$), à détecter les pixels de l'image d'origine I voisins spatialement de cette zone $Z_{i,j}$ de teinte Y afin de former un sous-ensemble « voisinage » $V_{Zi,j}$ de la zone $Z_{i,j}$ considérée, à comparer chacun des pixels de $V_{Zi,j}$ au modèle colorimétrique $M(A_i)$ associé à l'agglomérat $A_i$ afin de déterminer si sa couleur est suffisamment proche de celle du modèle $M(A_i)$ pour qu'il puisse être considéré comme un pixel de teinte chair et, si tel est le cas, d'affecter le pixel considéré à la zone $Z_{i,j}$ de teinte Y liée à l'agglomérat $A_i$.

On rappelle ici que, par l'expression "pixels non pris en compte dans l'image J", on entend désigner les pixels de l'image I n'ayant pas été préalablement détectés comme étant de teinte chair.

Les différentes étapes 1 à 5 du procédé de détection vont maintenant être explicitées en détail.

### 1) Première étape de détection de pixels de teinte chair

La première étape 1 de détection de pixels de teinte chair est effectuée dans un espace colorimétrique $C_1$, ici l'espace HSV. Il s'agit d'un espace à trois dimensions (H, S et V) dans lequel les dimensions H, S et V représentent respectivement la teinte, qui définit la couleur perçue par l'oeil humain, la saturation, qui définit la quantité de blanc dans la couleur, et la luminance, qui définit la luminosité de la couleur.

L'espace HSV est modélisé par un cône inversé. La teinte, la saturation et la luminance sont respectivement caractérisées par

- l'angle H dans le plan de la base du cône, avec $0 \leq H \leq 360°$,
- la distance à l'axe achromatique S, avec $0 \leq S \leq 1$ et
- la hauteur du cône, avec $0 \leq V \leq 255$.

Lors de la première étape 1 de détection de pixels de teinte chair dans l'image I, on procède à une opération de seuillage colorimétrique consistant à comparer, pour chaque pixel de l'image I, au moins une composante colorimétrique de ce pixel à un intervalle colorimétrique prédéfini de teinte chair, dans l'espace $C_1$ (HSV). Par définition, un "intervalle colorimétrique de teinte chair" est un intervalle occupé par la majorité des pixels de teinte chair. Dans l'exemple particulier de la description, la comparaison ne porte que sur les composantes H et S des pixels de l'image I. La dimension V n'est pas prise en compte afin de rendre la détection par seuillage colorimétrique plus robuste vis-à-vis des conditions d'éclairage. On détermine l'intervalle colorimétrique de teinte chair pour chacune des dimensions H et S par expérimentation. Dans l'exemple particulier de la description, l'intervalle de teinte chair $[H_{min}, H_{max}]$ pour la dimension H occupe la plage de valeurs [330, 30] et l'intervalle de teinte chair $[S_{min}, S_{max}]$ pour la dimension S occupe la plage de valeurs [0.20, 0.54].

L'opération de seuillage colorimétrique consiste à calculer un masque binaire MB tel que:

$$MB(p) = \begin{cases} 1 & \text{si } C_{\min}^i \leq I^i(p) \leq C_{\max}^i, \text{ pour i = H et i = S} \\ 0 & \text{sinon} \end{cases}$$

où

- i représente l'une des deux dimensions H et S de l'espace HSV,
- p représente un pixel de l'image I,
- $I^i(p)$ désigne la composante colorimétrique du pixel p suivant la dimension i et
- $C_{\min}^i, C_{\max}^i$ représentent les deux bornes, inférieure et supérieure, de l'intervalle de teinte chair pour la dimension i.

Le calcul du masque binaire MB consiste donc à attribuer la valeur "1" aux pixels p dont les composantes $I^H$(p) et $I^S$(p) sont respectivement comprises dans les intervalles [$H_{min}$, $H_{max}$] et [$S_{min}$, $S_{max}$], et la valeur "0" aux autres pixels, les pixels portant la valeur "1" étant considérés être de teinte chair. Le calcul du masque binaire permet ainsi de détecter au moins une partie des pixels de teinte chair.

2) Formation de l'image J

A partir de l'image d'origine I et de l'image MB(I) constituée par le masque binaire précédemment calculé, on forme une image J de teinte chair telle que:

$$J(p) = \begin{cases} I(p) \text{ si } MB(p) = 1 \\ 0 \quad \text{sinon.} \end{cases}$$

L'image J ne reprend que les pixels de teinte chair de l'image I d'origine détectés lors de la première étape de détection 1, la valeur "0" étant attribuée aux autres pixels de l'image I d'origine.

3) Etape de segmentation de l'image J

En référence à la figure 2, l'étape de segmentation 3 consiste à former m agglomérats colorimétriques $A_i$, ici dans l'espace $C_1$ (soit HSV), à partir des pixels de teinte chair de l'image J. Pour cela, dans une étape 3a, à partir de l'image J, on calcule un histogramme de couleurs H(J) tel que:

$$H(J)(c) = Card \{p, J(p) = c\}$$

où $c \in C_1$ et $c \neq 0$ et on fixe $H(J)(0) = 0$.

On notera ici qu'il existe différentes teintes, ou couleurs, de chair humaine, représentées par les différents points c de l'espace colorimétrique $C_1$ (ici HSV). L'histogramme H(J) représente une répartition colorimétrique des pixels ayant été détectés comme étant de teinte chair lors de la première étape de détection 1.

Dans une étape 3b, on détermine les modes de l'histogramme H(J) constitués par les teintes présentant les plus fortes densités de pixels, autrement dit les teintes chair humaine les plus fréquentes dans l'image J, par une méthode d'estimation de densité par noyau. Dans l'exemple particulier de la description, on utilise une méthode d'estimation de densité par noyau de type "Mean Shift", qui va maintenant être explicitée.

Méthode d'estimation de Mean Shift

Soit un échantillon de $n$ points {$x_1, x_2, , x_n$} dans un espace euclidien de dimension $d \, \Re^d$, ces $n$ points sont répartis dans l'espace suivant une certaine distribution de probabilité. Pour estimer en tout point $x \in \Re^d$, la densité de la distribution des $n$ échantillons, on définit l'estimation de densité $f$ utilisant le noyau $K$ et le rayon $h$ par :

$$\hat{f}_K(x) = \frac{1}{nh^d} \sum_{i=1}^{n} K(\frac{x-x_i}{h}).$$

Le noyau K(x) est une fonction scalaire satisfaisant :

$$\sup_{x \in \Re^d} |K(x)| < \infty, \quad \int_{\Re^d} |K(x)| dx < \infty, \quad \lim_{\|x\| \to \infty} \|x\| K(x) = 0, \quad \int_{\Re^d} K(x) dx = 1$$

Dans la pratique, on utilise le noyau d'Epanechnikov défini par :

$$K_E(x) = \begin{cases} \frac{1}{2} c_d^{-1}(d+2)(1-\|x\|^2) \ si \ \|x\| < 1 \\ 0 \ sinon \end{cases}$$

où $c_d$ désigne le volume de la sphère unité de dimension $d$.

La procédure Mean Shift consiste à rechercher les zones de forte densité dans l'espace $\Re^d$. Pour ce faire, on calcule le gradient de la densité qui peut être approché par le gradient de l'estimation de densité :

$$\nabla f(x) \cong \nabla \hat{f}_K(x) = \frac{1}{nh^d} \sum_{i=1}^{n} \nabla K(\frac{x-x_i}{h}).$$

En utilisant le noyau d'Epanechnikov, on obtient :

$$\nabla \hat{f}_{K_E}(x) = \frac{n_x}{nh^d c_d} \frac{d+2}{h^2} \left[ \frac{1}{n_x} \sum_{x_i \in S_h(x)} (x_i - x) \right]$$

où $S_h(x)$ désigne l'hypersphère de dimension $d$, de rayon $h$, de volume $h^d c_d$, contenant $n_x$ point et centrée en $x$. $S_h(x)$ est appelé le noyau uniforme.

Si l'on utilise les notations suivantes :

$$M_h(x) = \left[ \frac{1}{n_x} \sum_{x_i \in S_h(x)} x_i \right] - x$$

$$\hat{f}_U(x) = \frac{n_x}{nh^d C_d}$$

on a :

$$M_h(x) = \frac{h^2}{d+2} \frac{\nabla \hat{f}_E(x)}{\hat{f}_U(x)}.$$

La quantité $M_h(x)$ est appelée échantillon *Mean Shift* et la quantité $\hat{f}_U(x)$ définit l'estimation de densité avec le noyau uniforme de rayon $h$.

On peut ainsi s'apercevoir que l'estimation du gradient de la densité au point *x* peut être calculée à partir de l'échantillon Mean Shift utilisant un noyau uniforme centré en *x*. Le vecteur Mean Shift $M_h$ *(x)* a la direction du gradient de l'estimation de la densité en *x* lorsque cette estimation utilise le noyau d'Epanechnikov.

Ainsi, en translatant de façon itérative un point *x* de l'espace $\mathfrak{R}^d$ de la quantité $M_h(x)$, le point *x* définit un chemin convergeant vers une densité maximum.

A partir de cette propriété, on en déduit la procédure Mean Shift comprenant les étapes suivantes :

i) sélection aléatoire de *p* points $\{y_1, y_2,.... y_p\}$ dans l'espace $\mathfrak{R}^d$ ;
ii) calcul du vecteur Mean Shift $M_h(y_i)$ pour chaque point $y_i$ ,$1 \leq i \leq p$ ;
iii) translation de chaque point $y_i$ *(1 ≤ i ≤ p) par* la quantité $M_h(y_i)$ ;
iv) retour au point ii).

On obtient donc une procédure itérative simple qui converge obligatoirement vers plusieurs points de convergence constituant les points de plus forte densité.

Afin de détecter les teintes chair humaine les plus fréquentes dans l'image J (étape 3b), c'est-à-dire les modes de l'histogramme H(J), on applique la méthode d'estimation de Mean Shift à l'image J, dans un espace colorimétrique $C_2$, en l'espèce l'espace Luv. Le choix de l'espace Luv présente deux avantages: d'une part, la méthode d'estimation de la densité Mean Shift donne d'excellents résultats dans cet espace, et, d'autre part, la distance colorimétrique $d^{Luv}$ entre deux points $A_1$ et $A_2$ de l'espace Luv, ayant respectivement les coordonnées $(L_1, U_1, V_1)$ et $(L_2, U_2, V_2)$, est réduite à la distance euclidienne. Cette distance est donc définie par la formule suivante:

$$d^{LUV}(A_1,A_2) = \sqrt{(L_1 - L_2)^2 + (U_1 - U_2)^2 + (V_1 - V_2)^2}$$

L'étape 3b) comprend les sous-étapes suivantes:

3b-i) On détermine le rayon *r* du noyau utilisé par la méthode de Mean Shift et que l'on appellera également par la suite "fenêtre de recherche"

3b-ii) On sélectionne de façon aléatoire *k* pixels de teinte chair $P_x$ *(1 ≤x ≤k)* dans l'image J (on a donc $J (p_x)$ $\neq 0 \forall 1 \leq x \leq k)$.

3b-iii) On applique la procédure Mean Shift aux *k* pixels sélectionnés dans l'espace colorimétrique $C_2$ (ici Luv), afin d'obtenir un ensemble de points de convergence $pc_i$.

3b-iv) Si la distance au sens colorimétrique entre deux points de convergence $pc_i$ est inférieure à *r* (c'est-à-dire le rayon du noyau), on évince l'un des deux points de convergence, autrement dit on le supprime de l'ensemble des points de convergence. On supprime ainsi les points de convergence $pc_i$ superflus.

Le rayon *r* du noyau, autrement dit la taille de la fenêtre de recherche, déterminé à la sous-étape 3b-i), est ici proportionnel à la trace de la matrice de covariance de l'image J. Le calcul de cette matrice est effectué de la façon suivante :

Soit *(p_1,p_2,..., p_n)* l'ensemble des *n* pixels $p_x$ de l'image *J* tels $J(p_x) \neq 0$, c'est-à-dire les pixels détectés comme étant de teinte chair lors de la première étape 1 de détection de pixels de teinte chair par seuillage colorimétrique dans l'espace HSV. Chacun des pixels $p_x$ est caractérisé par un vecteur déterminant la couleur de $p_i$ dans l'espace Luv :

$$p_x = (p_x^1, p_x^2, p_x^3)^T = (L(p_x), U(p_x), V(p_x))^T,$$

où *T* désigne l'opération transposition.

Soit $\bar{p} = (\bar{p}^1, \bar{p}^2, \bar{p}^3)^T = (\bar{L}, \bar{U}, \bar{V})^T$ le vecteur couleur moyen c'est-à-dire

$$\overline{L} = \frac{1}{n}\sum_{x=1}^{n} L(p_x), \ \overline{U} = \frac{1}{n}\sum_{x=1}^{n} U(p_x) \ \text{et} \ \overline{V} = \frac{1}{n}\sum_{x=1}^{n} V(p_x).$$

Chaque « pixel vecteur » $p_x$ est alors centré sur le vecteur couleur moyen résultant en un « pixel vecteur centré » $\bar{p}_x$:

$$\bar{p}_x = p_x - \bar{p} = (\bar{p}_x^1, \bar{p}_x^2, \bar{p}_x^3)^T \ \forall 1 \leq x \leq n.$$

On a alors

$$Cov(i,j) = \frac{1}{n}\sum_{k=1}^{n}\overline{p}_k^{\,i}\,\overline{p}_k^{\,j} \quad \forall\, 1 \le i, j \le 3.$$

La diagonale de la matrice de covariance donne la variance dans les dimensions L, u et v.
On prend ici

$$r = 3\sqrt{\frac{\sum_{i=1}^{3}Cov(i,i)}{100}}\;.$$

Après suppression éventuelle d'un ou de plusieurs points de convergence à l'étape 3b-iv), on obtient m points de convergence $pc_i$ ($1 \le i \le m$ et $m < k$). Chacun de ces m points de convergence $pc_i$ définit le centre d'une forte densité colorimétrique de pixels de teinte chair, autrement dit un mode de l'histogramme H(J). Les m modes de l'histogramme H(j) représentent donc respectivement les m teintes chair les plus fréquentes dans l'image J. D'emblée, on notera qu'un "agglomérat colorimétrique $A_i$" est caractérisé par un mode de l'histogramme $pc_i$, et contient un ensemble de pixels proches au sens colorimétrique, c'est-à-dire de teinte proche, de ce mode $pc_i$.
Dans une étape 3c, on constitue les $m$ agglomérats colorimétriques $A_i$ ($1 \le i \le m$) à partir des $m$ points de convergence $pc_i$ respectivement dans l'espace colorimétrique $C_2$ (ici Luv). Pour cela, on associe chacun des pixels $p_x$ de teinte chair de l'image J (c'est-à-dire les pixels $p_x$ de l'image J tels que $J(p_x) \ne 0$) au mode $pc_i$ le plus proche au sens colorimétrique. Chaque agglomérat $A_i$, associé à un mode $pc_i$, contient l'ensemble des pixels associés à ce mode. Pour déterminer le mode $pc_i$ le plus proche au sens colorimétrique d'un pixel de teinte chair de l'image J, on utilise l'algorithme du plus proche voisin défini de la façon suivante:

$$A(p_x) = A_i \text{ tel que } d^{C_2}(J(P_x), Pc_i) \le d^{C_2}(J(p_x), pc_j) \quad \forall j \ne i \text{ et } 1 \le i, j \le m$$

où

- $A(p_x)$ représente l'agglomérat $A_i$ auquel le pixel $p_x$ est affecté, ou associé;
- $d^{C_2}(J(p_x), pc_i)$ représente la distance colorimétrique entre la couleur $J(p_x)$ du pixel $p_x$ et la couleur du mode $pc_i$ dans l'espace $C_2$ (Luv).

L'algorithme du plus proche voisin consiste donc à affecter, ou à associer, le pixel $p_x$ de teinte chair de l'image J à l'agglomérat $A_i$ si la distance colorimétrique entre ce pixel $p_x$ et le mode $pc_i$ associé à l'agglomérat $A_i$ est inférieure à chacune des distances colorimétriques entre ce pixel p et les autres modes $pc_{j \ne i}$ de l'image J.
Après avoir formé les m agglomérats colorimétriques $A_i$, dans une étape 3d, on décompose l'image J en x zones, ou régions, spatiales $Z_{i,j}$ (avec $1 \le i \le m$, $j \ge 1$) de teinte chair. Chaque zone $Z_{i,j}$ contient un bloc de pixels de teinte chair voisins, en contact deux à deux par au moins un côté de pixel, et appartenant à un même agglomérat colorimétrique $A_i$. Par définition, on dit que qu'une zone $Z_{i,j}$ de teinte chair est liée, ou associée, à un agglomérat $A_i$ lorsqu'elle contient des pixels appartenant à cet agglomérat $A_i$. On notera que le nombre x de zones spatiales $Z_{i,j}$ est supérieur ou égal au nombre total m d'agglomérats colorimétriques, selon que les pixels de chaque agglomérat $A_i$ appartiennent tous à une même zone spatiale $Z_{i,j}$ ou à différentes zones spatiales $Z_{i,j}$.

## 4) Etape de modélisation

Lors de l'étape de modélisation 4, on modélise les m agglomérats colorimétriques $A_i$ afin de créer m modèles colorimétriques de teinte chair. Par la suite, on notera $M(A_i)$ le modèle colorimétrique associé à l'agglomérat $A_i$ ($1 \le i \le m$), c'est-à-dire crée à partir de cet agglomérat $A_i$. Dans l'exemple particulier de la description, chaque agglomérat $A_i$ est modélisé par la moyenne colorimétrique des pixels qui le composent. On pourrait envisager toute autre méthode de modélisation.

## 5) Seconde étape de détection de pixels de teinte chair

L'étape de modélisation 4 est suivie par une seconde étape 5 de détection de pixels de teinte chair visant à accroître les zones $Z_{i,j}$ de teinte chair de l'image J.

D'emblée, on notera que l'espace "image" désigne l'espace graphique, ici bidimensionnel, contenant les images, ou représentations graphiques, I et J.

L'étape de détection 5 utilise une version modifiée d'un algorithme de segmentation par ligne de partage des eaux. Pour plus de renseignements concernant cet algorithme, le lecteur est invité à se reporter au document «*Morphological Operators for Image and Vidéo Compression»,* IEEE Transactions on Image Processing, Vol. 5, No. 6, Juin 1996 - Salembier P., Brigger P., Casas J.A., Pardàs M.. Cet algorithme utilise une structure de données de type « tas minimal ».

On forme un tas à partir de chaque zone $Z_{i,j}$ de teinte chair, liée à un agglomérat $A_i$, de l'image J. Il s'agit d'une structure de données qui peut être représentée sous la forme d'un arbre. Dans l'exemple particulier de la description, cet arbre est un arbre binaire équilibré contenant N noeuds, chaque noeud étant relié à un noeud supérieur et à deux noeuds inférieurs à l'exception des noeuds d'extrémité comprenant un noeud racine supérieur et des noeuds feuilles inférieurs. Chaque noeud de l'arbre est un élément $e_x=(p_x, d_x)$, avec $1 \leq x \leq N,$ constitué d'un pixel $p_x$ de l'image I et de la distance colorimétrique $d_x$ entre ce pixel $p_x$ et le modèle colorimétrique $M(A_i)$ de l'agglomérat $A_i$ associé à la zone de teinte chair considérée $Z_{i,j}$. Le tas a la propriété de "tas minimal" si la distance $d_x$ associée à chaque noeud $e_x$ est inférieure à la distance $d_x'$ associée à chaque noeud $e_x'$ situé en-dessous du noeud $e_x$. Ainsi, la distance minimale $d_{min}$ absolue de l'arbre est celle qui est localisée à la racine $e_{racine}$ de l'arbre. En outre, l'arbre est tel que la distance $d_{min}$ du noeud racine de l'arbre $e_{racine}$ est inférieure à la taille r de la fenêtre de recherche utilisée à l'étape 3b-iii) par la méthode d'estimation de la densité. Les opérations d'insertion ou celles de suppression de noeuds dans l'arbre doivent être suivies d'une réorganisation du tas par échanges de noeuds afin de préserver la propriété du tas.

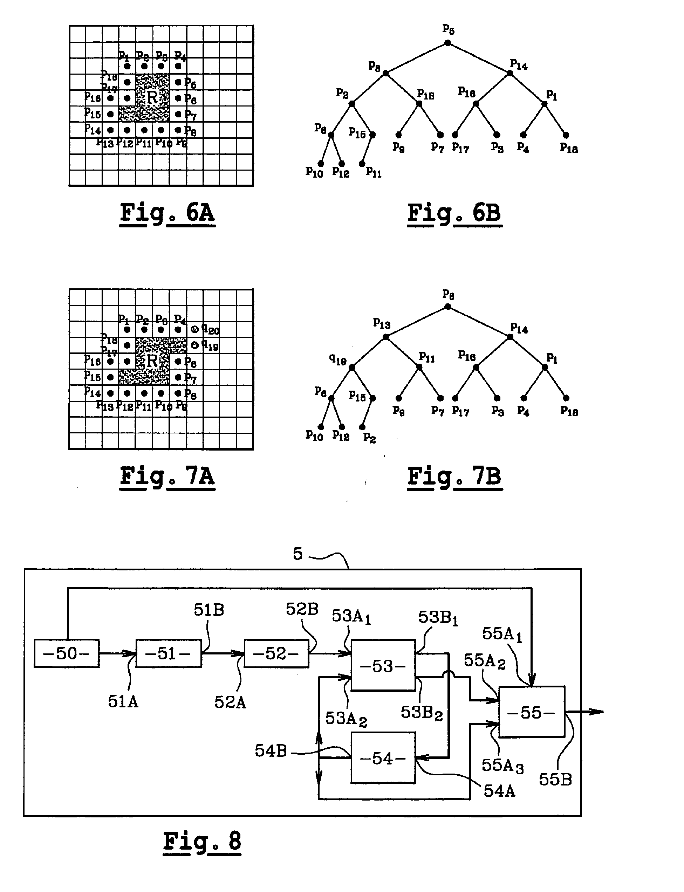

La figure 6A montre, à titre d'exemple illustratif, une représentation d'une zone spatiale $Z_{i,j}$ de teinte chair de l'image J, liée à un agglomérat colorimétrique $A_i$ et N pixels $P_x(1 \leq x \leq N)$ de l'image I voisins de cette zone de teinte chair $Z_{i,j}$, N étant ici égal à 18. La figure 6B représente un tas formé à partir des pixels $p_x$ voisins de la zone de teinte chair $Z_{i,j}$ de la figure 6A et contenant donc N noeuds $e_x=(p_x, d_x)$, avec $1 \leq x < N$. Le noeud $e_5$ de la figure 6B constitue le noeud racine de l'arbre.

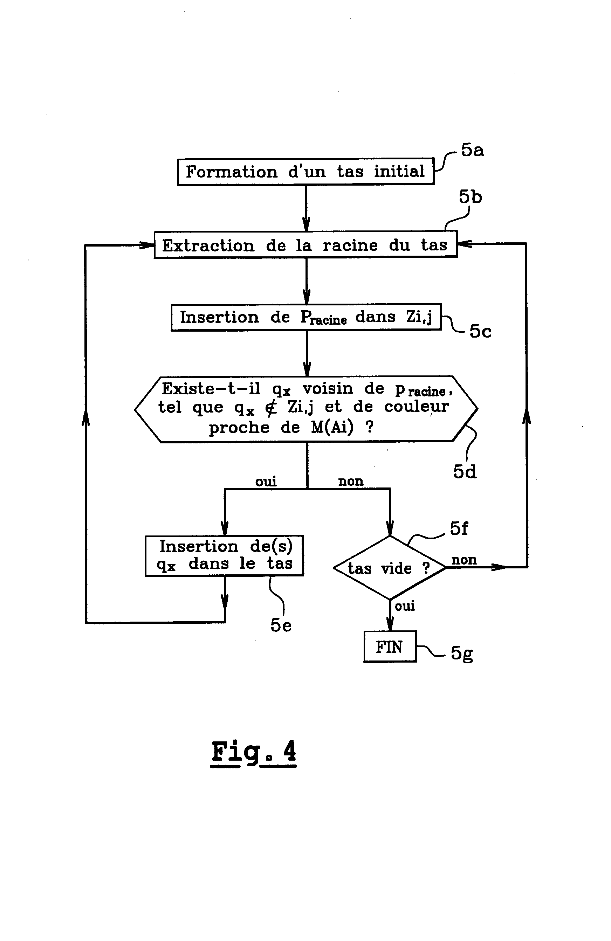

En référence à la figure 4, l'étape de détection 5 se scinde elle-même en plusieurs sous-étapes Sa à 5g.

5a) Formation d'un tas initial global.

5b) Extraction de la racine du tas.

5c) Insertion dans une zone $Z_{i,j}$ du pixel $p_{racine}$ de la racine du tas.

5d) Test afin de déterminer s'il existe des pixels $q_x$ de l'image I, voisins spatialement (c'est-à-dire dans l'espace image) du pixel racine $p_{racine}$ inséré dans la zone $Z_{i,j}$, mais non déjà contenus dans une zone de teinte chair de l'image J, et proches au sens colorimétrique du modèle $M(A_i)$ de l'agglomérat $A_i$ associé à la zone $Z_{i,j}$.

5e) S'il existe un ou plusieurs nouveau(x) pixel(s) voisin(s) $q_x$ proches au sens colorimétrique du modèle $M(A_i)$, insertion de ce ou ces pixel(s) $q_x$ dans le tas et retour à l'étape 5b).

5f) Sinon, test afin de déterminer si le tas est vide. Si le tas n'est pas vide, retour à l'étape 5b). Si le tas est vide, passage à l'étape 5g).

5g) Fin de l'étape 5.

Le processus décrit par les étapes 5a) à 5g) est ici réalisé pour toutes les zones $Z_{i,j}$ afin de former un seul tas global, pour toutes les zones $Z_{i,j}$. En variante, on pourrait former un tas par zone $Z_{i,j}$.

Sur la figure 7A, on a représenté la zone de teinte chair $Z_{i,j}$ de la figure 6A agrandie par insertion du pixel racine $p_5$ et les nouveaux pixels voisins de la région $A_i$, à savoir $q_{19}$ et $q_{20}$. La figure 7B représente le tas de la figure 6B réorganisé après extraction du pixel racine $p_5$ et insertion du nouveau pixel voisin $q_{19}$. Dans cet exemple, le pixel $q_{20}$ n'est pas inséré dans le tas car la distance colorimétrique entre ce pixel et le modèle $M(A_i)$ est supérieure à la taille r de la fenêtre de recherche.

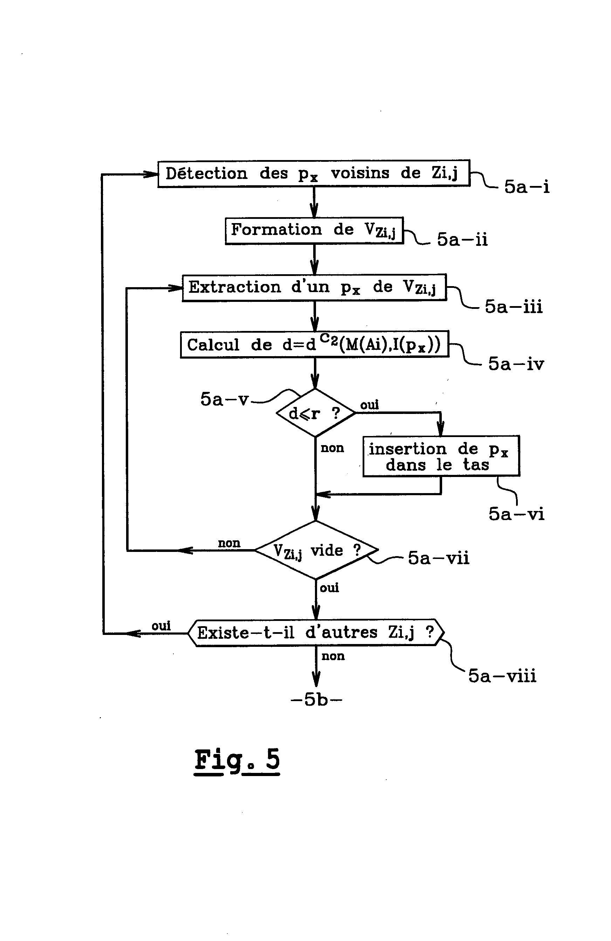

En référence à la figure 5, l'étape 5a de formation du tas initial comprend, pour chaque zone $Z_{i,j}$, les sous-étapes suivantes:

5a-i) On détecte dans l'image d'origine I les pixels $p_x$ de l'image I, non contenus dans la zone de teinte chair $Z_{i,j}$ liée à l'agglomérat $A_i$ (c'est-à-dire tels que $J(p_x) = 0$) et voisins spatialement de pixels $p_{Z_{i,j}}$ de la zone $Z_{i,j}$, dans l'espace image. Par définition, les "pixels voisins $p_x$" d'un pixel $p_{Z_{i,j}}$ sont ici les pixels "adjacents" au pixel $p_{Z_{i,j}}$, en contact avec celui-ci soit par un côté du pixel $p_{Z_{i,j}}$ soit par un sommet du pixel $p_{Z_{i,j}}$.

5a-ii) On forme un sous-ensemble "voisinage" $V_{Z_{i,j}}$ associé à la zone $Z_{i,j}$ dans lequel on insère les pixels voisins $p_x$ de la zone $Z_{i,j}$ détectés à l'étape 5ai).

5a-iii) On extrait un pixel $p_x$ du sous-ensemble voisinage $V_{Zi,j}$ (le pixel extrait $p_x$ étant supprimé de l'ensemble $V_{Zi,j}$).

5a-iv) On calcule la distance colorimétrique $d^{C_2}$ $(M(A_i),I(p_x))$ entre le pixel $p_x$ extrait du sous-ensemble voisinage $V_{Zi,j}$ et le modèle colorimétrique $M(A_i)$ de l'agglomérat $A_i$ associé à la zone de teinte chair $Z_{i,j}$, dans l'espace colorimétrique $C_2$ (ici Luv).

5a-v) On effectue un test pour déterminer si cette distance colorimétrique $d^{C_2}$ $(M(A_i),I(p_x))$ est inférieure ou égale à un seuil prédéfini, lequel est ici pris égal au rayon r du noyau utilisé par la méthode d'estimation de densité à l'étape 3b-iii). Si la distance $d^{C_2}$ $(M(A_i),I(p_x))$ est inférieure au seuil r, cela signifie que le pixel est détecté comme étant de teinte chair et on passe à l'étape 5a-vi). Si la distance $d^{C_2}$ $(M(A_i), I(p_x))$ est supérieure au seuil r, cela signifie que le pixel n'est pas détecté comme étant de teinte chair et on passe à l'étape 5a-vii).

5a-vi) S'il a été détecté que le pixel $p_x$ est de teinte chair à l'étape 5a-v), on insère ce pixel $p_x$ dans le tas puis on passe à l'étape 5a-vii).

5a-vii) On effectue un test afin de déterminer si l'ensemble $V_{Zi,j}$ est vide. Si tel est le cas, on passe à l'étape 5a-viii). Sinon, on réitère l'étape 5a-iii) en extrayant un nouveau pixel $p_x$ de l'ensemble $V_{Zi,j}$.

5a-viii) On effectue un test afin de déterminer s'il existe d'autres zones $Z_{i,j}$ à traiter. Si tel est le cas, on réitère les étapes précédentes 5a-i) à 5a-vii) pour cette nouvelle zone $Z_{i,j}$, sinon on passe à l'étape b).

Dans l'étape 5c), le pixel $p_x$ est inséré dans la zone $Z_{i,j}$ dont il est voisin spatialement. Après chaque insertion d'un nouveau pixel $p_x$ dans une zone $Z_{i,j}$ (étape 5c), on procède à l'étape 5d) visant à déterminer s'il existe un ou plusieurs pixel(s) $q_x$ voisin(s) du nouveau pixel $p_x$, mais n'appartenant pas à la zone $Z_{i,j}$ et de couleur proche de celle du modèle $M(A_i)$ de l'agglomérat colorimétrique A; associé à cette zone $Z_{i,j}$. Cette étape 5d) est partiellement analogue à l'étape Sa): On détecte d'abord s'il existe un ou plusieurs nouveau(x) pixel(s) $q_x$ de l'image I, non contenus dans la zone $Z_{i,j}$ et voisins spatialement (c'est-à-dire dans l'espace image) du nouveau pixel $p_x$ inséré dans la zone $Z_{i,j}$. En cas de détection d'un ou de plusieurs nouveau(x) pixel(s) $q_x$ voisin(s) spatialement de la zone $Z_{i,j}$, on ajoute ce ou ces pixels au sous-ensemble voisinage $V_{Zi,j}$ et on réitère les étapes 5a-iii) à 5a-viii) de détection des pixels de teinte chair parmi les pixels du sous-ensemble voisinage $V_{Zi,j}$, afin de déterminer si ces pixels $q_x$ sont proches au sens colorimétrique du modèle $M(A_i)$ de l'agglomérat $A_i$ associé à la zone $Z_{i,j}$. En d'autres termes, on applique les étapes 5a-iii) à 5a-vii) au(x) nouveau(x) pixel(s) voisins $q_x$. Ainsi, on calcule la distance colorimétrique entre chaque nouveau pixel voisin $q_x$ et le modèle colorimétrique $M(A_i)$ de l'agglomérat $A_i$ associé à la zone $Z_{i,j}$ et on compare cette distance au rayon r du noyau utilisé par la méthode d'estimation de densité. Si cette distance colorimétrique est inférieure au rayon r (autrement dit si le pixel $q_x$ est proche au sens colorimétrique du modèle colorimétrique $M(A_i)$), on insère le pixel $q_x$ dans le tas dans l'étape 5e. Sinon, on écarte le pixel $q_x$ et on effectue un test pour déterminer si le sous-ensemble voisinage $V_{Zi,j}$ est vide. Si tel est le cas, on met fin à l'étape 5d et on passe à l'étape 5b d'extraction de la racine du tas. Sinon, on réitère les étapes qui viennent d'être décrites (c'est-à-dire les étapes 5a-iii) à 5a-viii) appliquées aux nouveaux pixels voisins $q_x$), jusqu'à ce que le sous-ensemble voisinage $V_{Zi,j}$ soit vide.

Le procédé qui vient d'être décrit est mis en oeuvre par un dispositif 5, représenté sur la figure 8, comprenant un module 50 de stockage d'une image I, un premier module 51 de détection de pixels de teinte chair, un module 52 de formation d'une image J, un module 53 de segmentation de l'image J, un module de modélisation 54 et un second module 55 de détection de pixels de teinte chair.

Le module de stockage 50 est destiné à enregistrer et à stocker une image I et est relié à une entrée 51A du premier module de détection 51. Celui-ci est agencé pour détecter au moins une partie des pixels de teinte chair de l'image I, comme précédemment explicité dans l'étape 1 du procédé, et à délivrer, en sortie 51B, les pixels de teinte chair ainsi détectés. En fonctionnement, le premier module de détection 51 détecte des pixels de teinte chair de l'image I ici par seuillage colorimétrique, dans l'espace HSV, en utilisant les intervalles de teinte chair $[H_{min}, H_{max}]$ et $[S_{min}, S_{max}]$ obtenus par expérimentation.

Le module 52 de formation de l'image J est agencé pour former une image J contenant les pixels de teinte chair détectés par le premier module de détection 51 (étape 2 du procédé). Il comprend une entrée 52A, reliée à la sortie 51B du module de détection 51, et une sortie 52B destinée à délivrer l'image J telle que:

$$J(p) = \begin{cases} -\,I(p)\ si\ le\ pixel\ p\ a\ été\ détecté\ comme\ étant\ de\ teinte\ chair\ par\ seuillage\ colorimétrique \\ \\ -\,0\ \ sinon. \end{cases}$$

Le module de segmentation 53 est agencé pour former m agglomérats colorimétrique $A_i$ à partir des pixels de teinte chair de l'image J et pour décomposer l'image J en x zones spatiales $Z_{i,j}$ avec $1 \le i \le m, j \ge 1$ et $x \ge m$ contenant chacune un bloc de pixels voisins appartenant au même agglomérat colorimétrique $A_i$, comme précédemment explicité dans l'étape 3 du procédé. Le module de segmentation 53 comprend deux entrées $53A_1$ et $53A_2$ et deux sorties $53B_1$

et 53B$_2$. L'entrée 53A$_1$ et la sortie 53B$_1$ sont respectivement reliées à la sortie 52B du module de segmentation et à une entrée 54A du module de modélisation 54, tandis que l'entrée 53A$_2$ et la sortie 53B$_2$ sont respectivement reliées à la sortie 54B du module de modélisation et à une entrée 55A du second module de détection 55. Les sorties 53B$_1$ et 53B$_2$ sont destinées à délivrer les m agglomérats colorimétriques A$_i$ et les x zones Z$_{i,j}$.

Le module de modélisation 54 est agencé pour créer m modèle colorimétriques de teinte chair à partir des m agglomérats colorimétriques A$_i$, comme précédemment explicité dans l'étape 4 du procédé. Il comprend une entrée 54A reliée à la sortie 53B$_1$ du module de segmentation et une sortie 54B destinée à délivrer m modèles colorimétriques de teinte chair M(A$_i$) respectivement créés à partir des m agglomérats colorimétriques A$_i$.

Le second module de détection 55 est agencé pour détecter des pixels de teinte chair dans l'image J, comme précédemment explicité dans l'étape 5 du procédé. Il comprend trois entrées 55A$_1$, 55A$_2$ et 55A$_3$ respectivement reliées au module de stockage 50, à la sortie 53B$_2$ du module de segmentation 53 et à la sortie 54B du module de modélisation 54. En fonctionnement, le module de détection 55 reçoit, par les entrées 55A$_1$, 55A$_2$ et 55A$_3$, l'image I, l'image J comprenant x zones Z$_{i,j}$ de teinte chair et les modèles colorimétriques de teinte chair M(A$_i$), respectivement, et délivre par la sortie 54B l'ensemble des pixels de teinte chair détectés.

Dans l'exemple qui vient d'être décrit, le sous-ensemble V$_{Zi,j}$ de pixels voisins de la zone, ou région, spatiale Z$_{i,j}$ contient les pixels adjacents aux pixels de teinte chair de la zone Z$_{i,j}$ de l'image J, c'est-à-dire en contact avec des pixels de la zone Z$_{i,j}$ soit par un côté soit par un sommet. En variante, on pourrait inclure dans le sous-ensemble voisinage Vz$_{i,j}$ les pixels q de l'image I adjacents au pixel p ou séparés de celui-ci par n pixels au plus (avec n $\geq$ 1).

On pourrait supprimer l'étape de segmentation de l'image J consistant à former m agglomérats colorimétriques à partir des pixels de teinte chair de l'image J puis, dans l'image J, x zones, ou régions, spatiales Z$_{i,j}$ liées aux différents agglomérats A$_i$. Dans ce cas, lors de l'étape de modélisation 4, on créerait un seul modèle colorimétrique à partir de l'ensemble des pixels de teinte chair de l'image J.

Lors de la première étape de détection 1, on pourrait utiliser une méthode différente de celle décrite dans l'exemple de la description, laquelle pourrait ne pas être basée sur un seuillage colorimétrique.

Dans la description qui précède, l'étape 1 de détection de pixels de teinte chair par seuillage colorimétriques est effectuée dans l'espace colorimétrique HSV alors que les étapes consistant à former les m agglomérats colorimétriques et à les modéliser afin de créer m modèles colorimétriques M(A$_i$) de teinte chair sont réalisées dans l'espace colorimétrique Luv. On pourrait utiliser différemment ces espaces colorimétriques pour effectuer ces étapes ou utiliser d'autres espaces colorimétriques, différents de HSV et de Luv.

Le procédé de détection de l'invention pourrait être appliqué à la détection de pixels de teinte Y différente d'une teinte chair.

**Revendications**

1. Procédé de détection de pixels d'une teinte donnée Y dans une image I composée d'une pluralité de pixels p, comprenant

   - une première étape (1) de détection de pixels de teinte Y consistant à détecter au moins une partie des pixels de teinte Y dans l'image d'origine I,
   - une étape de modélisation (4) consistant à créer au moins un modèle colorimétrique de la teinte Y à partir des pixels de teinte Y détectés lors de la première étape de détection et
   - une seconde étape (5) de détection de pixels de teinte Y consistant, pour chacun des pixels d'un sous-ensemble V de pixels de l'image I none détectés lors de la première étape de détection, à comparer ledit pixel au' modèle colorimétrique préalablement créé afin de déterminer s'il s'agit de pixels'de teinte Y,

     procédé **caractérisé par le fait que**

     - il comprend une étape (2) de formation d'une image J contenant les pixels de teinte Y détectés lors de la première étape de détection (1),
     - dans la seconde étape de détection (5), on forme ledit sous-ensemble V (4a-ii)) à l'aide des pixels voisins des pixels de teinte Y de l'image J (4a-i)) dans l'espace image et
     - on insère dans l'image J les nouveaux pixels p de teinte Y détectés lors de la seconde étape de détection (4c).

2. Procédé selon la revendication 1, dans lequel, à chaque insertion d'un nouveau pixel p dans l'image J,

   - on détermine s'il existe au moins un pixel q de l'image I, non pris en compte dans l'image J et voisin de ce nouveau pixel p de l'image J (4d), et

- si tel est le cas, on ajoute ledit pixel voisin q au sous-ensemble V et on réitère la seconde étape de détection en l'appliquant audit pixel q (4d).

3. Procédé selon l'une des revendications 1 et 2, dans lequel la seconde étape de détection des pixels de teinte Y consiste à calculer la distance colorimétrique entre chacun des pixels du sous-ensemble V et le modèle colorimétrique créé à partir de l'image J (4a-iii)) et à déterminer si cette distance colorimétrique est inférieure à un seuil prédéfini (4a-iv)).

4. Procédé selon la revendication 3, dans lequel pour insérer de nouveaux pixels de teinte Y dans l'image J :

- on insère (4a-vi)) les pixels du sous-ensemble V séparés du modèle colorimétrique de teinte Y par une distance colorimétrique inférieure audit seuil dans une structure de données de type tas minimal de manière à former un arbre comprenant des noeuds $e_x$, constitués chacun d'un couple $(p_x, d_x)$ dans lequél $p_x$ et $d_x$ représentent respectivement un pixel de l'image I, voisin d'un pixel de teinte Y de l'image J et non pris en compte dans l'image J, et la distance colorimétrique entre ce pixel $p_x$ et ledit modèle colorimétrique, l'arbre étant tel que la distance $d_x$ associée à chaque noeud $e_x$ est inférieure à la distance $d_x'$ associée à chaque noeud $e_x'$ situé en-dessous du noeud $e_x$ et la distance colorimétrique $d_{min}$ associée au noeud racine $e_{racine}$ est inférieure au rayon r du noyau utilisé par la méthode d'estimation de densité, et
- on affecte le pixel $p_{racine}$ du noeud racine $e_{racine}$ de l'arbre à l'image J (4c).

5. Procédé selon la revendication 4, dans lequel

- pour chaque nouveau pixel $p_x$ de teinte Y affecté à l'image J, on détermine s'il existe au moins un pixel $q_x$ de l'image I non pris en compte dans l'image J et voisin de ce nouveau pixel $p_x$ (4d),
- on calcule la distance colorimétrique entre ledit pixel $q_x$ et le modèle colorimétrique de la teinte Y (4d) et
- si cette distance est inférieure au rayon r du noyau utilisé par la méthode d'estimation de densité, on insère ledit pixel $q_x$ dans la structure de données de type tas minimal (4e).

6. Procédé selon l'une des revendications 1 à 5, dans lequel, lors de la première étape (1) de détection de pixels de teinte Y de l'image I, on détecte les pixels de teinte Y dans l'image I par une opération de seuillage colorimétrique consistant à comparer, pour chaque pixel de l'image I, au moins une composante colorimétrique de ce pixel à un intervalle colorimétrique prédéfini de teinte Y.

7. Procédé selon l'une des revendications 1 à 6, dans lequel il est prévu une étape (2) de segmentation de l'image J consistant à former m agglomérats colorimétriques $A_i$ à partir des pixels de teinte Y de l'image J et l'étape de modélisation (3) consiste à modéliser chacun des m agglomérats Ai afin de créer m modèles colorimétriques M $(A_i)$ de teinte Y, chaque modèle colorimétrique $M(A_i)$ de teinte Y étant associé à l'agglomérat $A_i$ à partir de laquelle ledit modèle a été créé.

8. Procédé selon la revendication 7, dans lequel, après avoir formé les m agglomérats colorimétriques $A_i$, on décompose l'image J en x zones spatiales $Z_{i,j}$ de teinte Y, avec $1 \leq i \leq m, j \geq 1$ et $x \geq m$, contenant chacune un bloc de pixels voisins les uns des autres et appartenant au même agglomérat colorimétrique $A_i$.

9. Procédé selon la revendication 8, dans lequel la seconde étape de détection consiste, pour chacune des zones $Z_{i,j}$ de teinte Y liée à un agglomérat colorimétrique $A_i$ donné, à sélectionner des pixels de l'image I voisins spatialement de cette zone $Z_{i,j}$ de teinte Y (4a-i)), l'ensemble des pixels ainsi sélectionnés formant un sous-ensemble $V_{Z_{i,j}}$, à calculer la distance colorimétrique entre chacun des pixels du sous-ensemble $V_{Z_{i,j}}$(4a-iv)) et le modèle colorimétrique $M(A_i)$ de la teinte Y associé à l'agglomérat $A_i$ et à déterminer si cette distance est inférieure au seuil prédéfini (4a-v)) afin, si tel est le cas, d'affecter ledit pixel à ladite zone $Z_{i,j}$ de teinte Y (4a-vi)).

10. Procédé selon l'une des revendications 7 à 9, dans lequel, pour former les m agglomérats colorimétriques lors l'étape (3) de segmentation de l'image J,

- on calcule un histogramme des teintes Y de l'image J (3a),
- on détermine les modes de l'histogramme constitués par les teintes Y de l'histogramme ayant les plus fortes densités de pixels (3b),
- on associe chacun des pixels de teinte Y de l'image J au mode le plus proche au sens colorimétrique afin de constituer les m agglomérats colorimétriques (3c), chaque agglomérat étant **caractérisé par** un mode et contenant les pixels associés à ce mode.

11. Procédé selon l'une des revendications 9 et 10, dans lequel, pour déterminer les modes de l'histogramme (3b), on utilise une méthode d'estimation de densité par noyau, ledit noyau ayant un rayon r.

12. Procédé selon la revendication 11, dans lequel on utilise une méthode d'estimation de densité par noyau de type "Mean Shift".

13. Procédé selon l'une des revendications 11 et 12, dans lequel Si la distance colorimétrique entre deux modes est inférieure au rayon r dudit noyau, on évince l'un des deux modes (3b-iv)).

14. Procédé selon l'une des revendications 11 à 13, dans lequel on sélectionne de façon aléatoire une pluralité de pixels de teinte Y dans l'image J (3b-ii)) et on applique la méthode d'estimation de densité par noyau aux pixels sélectionnés de façon aléatoire (3b-iii)).

15. Procédé selon l'une des revendications 10 à 14, dans lequel, lors la seconde étape (4) de détection de pixels de teinte Y, le seuil auquel on compare la distance colorimétrique entre un pixel du sous-ensemble V et le modèle colorimétrique de l'image J est pris égal au rayon r du noyau utilisé par la méthode d'estimation de densité.

16. Procédé selon l'une des revendications 10 à 15, dans lequel le rayon r du noyau est proportionnel à la trace de la matrice de covariance de l'image J.

17. Procédé selon l'une des revendications 1 à 16, dans lequel pour la première étape (1) de détection de pixels de teinte Y on utilise un premier espace colorimétrique ($C_1$) et, pour l'étape de modélisation de l'image J ainsi que pour la seconde étape de détection de pixels de teinte Y, on utilise un second espace colorimétrique ($C_2$).

18. Procédé selon la revendication 17, dans lequel le premier espace colorimétrique est l'espace HSV et le second espace colorimétrique est l'espace Luv.

19. Procédé selon l'une des revendications 1 à 18, dans lequel la modélisation de l'image J, ou d'un agglomérat colorimétrique $A_i$ de l'image J, consiste à calculer la moyenne colorimétrique des pixels qui composent l'image J, ou ladite région colorimétrique $A_i$ de l'image J.

20. Dispositif pour la mise en oeuvre du procédé de la revendication 1, comprenant

- des premiers moyens (51) de détection de pixels de teinte Y de l'image I, agencés pour détecter au moins une partie des pixels de teinte Y dans l'image I,
- des moyens de modélisation (54) agencés pour créer au moins un modèle colorimétrique à partir des pixels de teinte Y détectés par les premiers moyens de détection (51) et
- des seconds moyens (55) de détection de pixels de teinte Y, agencés pour, pour chacun des pixels d'un sous-ensemble V de pixels de l'image I non détectés par les premiers moyens de détection (51), comparer ledit pixel au modèle colorimétrique préalablement créé afin de déterminer s'il s'agit de pixels de teinte Y,

   dispositif **caractérisé par le fait que**

   - il comprends de moyens (52) pour former une image J contenant les pixels de teinte Y détectés par les premiers moyens de détection,
   - les seconds moyens de détection (55) sont agencés pour former ledit sous-ensemble V à l'aide des pixels voisins des pixels de teinte Y de l'image J dans l'espace image et pour insérer dans l'image J les nouveaux pixels p de teinte Y détectés.

21. Dispositif selon la revendication 20, dans lequel il est prévu des moyens (53) de segmentation de l'image J agencé pour former m agglomérats colorimétriques $A_i$ à partir des pixels de teinte Y de l'image J et les moyens de modélisation (54) sont agencés pour créer m modèles colorimétriques $M(A_i)$ de teinte Y à partir des m agglomérats colorimétriques $A_i$.

1<sup>ère</sup> détection ⌐ 1

↓

Formation de l'image J ⌐ 2

↓

Segmentation ⌐ 3

↓

Modélisation ⌐ 4

↓

2<sup>nde</sup> détection ⌐ 5

**Fig. 1**

3a ⌐ Calcul de $H(J)$

↓

3b ⌐ Détermination des m modes de $H(J)$

↓

3c ⌐ Formation des m agglomérats $A_i$

↓

**Fig. 2**

Décomposition de l'image J en x zones $Z_{i,j}$

3d ⌐

Détermination du rayon r ⌐ 3b−i)

↓

Sélection aléatoire de k pixels dans l'image J ⌐ 3b−ii)

↓

**Fig. 3**

Détermination des $pc_i$ par la procédure de Mean Shift ⌐ 3b−iii)

↓

Suppression des $pc_i$ superflus ⌐ 3b−iv)

```
                                            ┌─── 5a
        ┌─────────────────────────────────┐
        │  Formation d'un tas initial     │
        └─────────────────────────────────┘
                        │              ┌─── 5b
                        ▼
   ┌──►┌─────────────────────────────────────┐◄──┐
   │   │  Extraction  de  la  racine  du  tas │   │
   │   └─────────────────────────────────────┘   │
   │                    │                         │
   │                    ▼                         │
   │        ┌──────────────────────────────┐      │
   │        │ Insertion de Pracine dans Zi,j│      │
   │        └──────────────────────────────┘      │
   │                    │          └─── 5c         │
   │                    ▼                          │
   │      ⬡──────────────────────────────────⬡     │
   │     │ Existe−t−il qx voisin de pracine,   │    │
   │     │ tel que qx ∉ Zi,j et de couleur     │    │
   │     │        proche de M(Ai) ?            │    │
   │      ⬡──────────────────────────────────⬡     │
   │                    │             └─── 5d       │
   │            oui     │    non                    │
   │         ┌──────────┴──────────┐                │
   │         ▼                     ▼      ┌─── 5f    │
   │  ┌──────────────┐           ◇─────────◇        │
   │  │ Insertion de(s)│         │ tas vide ? │──non─┘
   │  │ qx dans le tas │          ◇─────────◇
   │  └──────────────┘                │
   │         │         └─── 5e       oui
   └─────────┘                        ▼
                                ┌──────────┐
                                │   FIN    │── 5g
                                └──────────┘
```

**Fig. 4**

Détection des $p_x$ voisins de $Z_{i,j}$ — 5a–i

Formation de $V_{Z_{i,j}}$ — 5a–ii

Extraction d'un $p_x$ de $V_{Z_{i,j}}$ — 5a–iii

Calcul de $d = d^{C_2}(M(A_i), I(p_x))$ — 5a–iv

5a–v — $d \leqslant r$ ? — oui — insertion de $p_x$ dans le tas — 5a–vi

non

non — $V_{Z_{i,j}}$ vide ? — 5a–vii

oui

oui — Existe-t-il d'autres $Z_{i,j}$ ? — 5a–viii

non

–5b–

**Fig. 5**

18

**Fig. 6A**

**Fig. 6B**

**Fig. 7A**

**Fig. 7B**

**Fig. 8**